# DEMANDE DE BREVET EUROPEEN

(11) **EP 1 384 978 A1**
(43) Date de publication de la demande: **28.01.2004**
(21) Numéro de dépôt: 03360092.5
(22) Date de dépôt: 25.07.2003
(51) Int. Cl.: G01J 5/08, G05D 23/27

(54) **Moyen de mesure de température de surface pour surface chauffante et/ou rafraîchissante**

(30) Priorité: 26.07.2002 FR 0209536
(71) Demandeur: Hager Electro S.A.S. (société par Actions Simplifiée), 67210 Obernai (FR)
(72) Inventeur: Frommweiler, Olivier, 67700 Eckartswiller (FR); Valance, Jean-Christophe, 57430 Kirrviller (FR); Dugast, Frédéric, 44340 Bouguenais (FR)
(74) Mandataire: Nuss, Pierre

(57) **Abrégé**

La présente invention a pour objet un moyen de mesure de température de surface pour surface chauffante et/ou rafraîchissante caractérisé en ce qu'il est constitué par un thermostat (1) comportant, outre un capteur de température ambiante (5, 17), un capteur de radiation thermique à détection optique (8), sans contact physique avec ladite surface.

L'invention est plus particulièrement applicable dans le domaine des équipements du bâtiment, à savoir domestiques, locaux commerciaux ou tertiaires, notamment de chauffage et/ou de climatisation, plus particulièrement les dispositifs du type sol chauffant et/ou climatisé et plafond chauffant et/ou climatisé, et notamment les moyens de mesure de température de surface d'un tel sol ou plafond chauffant et/ou climatisé.

## Description

La présente invention concerne le domaine des équipements du bâtiment, à savoir domestiques, locaux commerciaux ou tertiaires, notamment de chauffage et/ou de climatisation, plus particulièrement les dispositifs du type sol chauffant et/ou climatisé et plafond chauffant et/ou climatisé, et notamment les moyens de mesure de température de surface d'un tel sol ou plafond chauffant et/ou climatisé et a pour objet un tel moyen de mesure pour surface chauffante et/ou rafraîchissante, sans contact physique.

Généralement, la mesure de la température d'un plancher chauffant est effectuée par l'intermédiaire d'un capteur à thermistance, ce capteur étant placé dans le sol entre les éléments chauffants et/ou rafraîchissants et lié par une connexion filaire à un thermostat, qui est fixé au mur. Un procédé de mesure analogue est utilisé dans le cas d'utilisation de plafonds chauffants et/ou rafraîchissants.

Ce procédé de mesure de température présente, cependant, un certain nombre d'inconvénients.

En effet, il est nécessaire d'insérer une thermistance dans une gaine insérée dans le sol, lorsque le thermostat est installé postérieurement. Il est également proposé de poser une goulotte entre le thermostat et l'endroit du sol dont on veut mesurer la température. En outre, la thermistance peut subir des dommages mécaniques au niveau de sa surface de mesure, ces dommages pouvant altérer ses capacités de mesure de température. Ces dommages peuvent être dus à la présence d'eau ou de gravats dans la gaine, à un écrasement de câble, etc. De plus, le placement de la thermistance lors de l'installation de l'élément chauffant et/ou rafraîchissant dans le sol peut ne pas être prévu, voire peut tout simplement être oublié. Un tel cas peut notamment se produire lors d'une rénovation.

L'utilisation d'une thermistance induit également une certaine inertie quant à la mesure de température. Lors d'un changement de température du sol, il faut, en effet, un certain laps de temps à la thermistance pour arriver à la même température que celle du sol. Par ailleurs, il peut exister un différentiel de température entre la température réelle de la surface du sol, qui est recherchée, et la température mesurée dans le sol par ladite thermistance.

On connaît également, par DE-A-4135086, un capteur infrarouge intégré dans un thermostat, ce capteur mettant en oeuvre une thermopile qui mesure la température ambiante par l'intermédiaire de différents procédés physiques.

Par ailleurs, US-A-4 671 458 décrit un appareil de chauffage ou de climatisation utilisant un capteur infra-rouge qui permet d'intégrer les évolutions de l'environnement, afin de mieux réguler la température ambiante. Cependant, un tel dispositif n'est pas applicable à la régulation de plancher chauffant ou rafraîchissant.

On connaît aussi, par JP-A-03 079947 un appareil de climatisation mettant en oeuvre un capteur infra-rouge mesurant la radiation de température ambiante. Cet appareil ne prend pas en compte une température surfacique d'un sol ou d'un plafond.

La présente invention a pour but de pallier ces inconvénients en proposant un moyen de mesure de température de surface, sans contact physique, permettant de relever avec précision la température de surface d'un sol ou d'un plafond, ce sans contact et sans intégration de différents moyens de mesure dans ledit sol ou plafond et en prenant en considération la température ambiante par l'intermédiaire d'un thermostat.

A cet effet, le moyen de mesure de température de surface est caractérisé en ce qu'il est constitué par un thermostat comportant, outre un capteur de température ambiante, un capteur de radiation thermique à détection optique de température de surface, sans contact physique avec ladite surface.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels:
la figure 1 est une représentation schématique d'un moyen de mesure de température de surface d'un sol chauffant et/ou rafraîchissant de type et d'utilisation classiques connus ;
la figure 2 est une vue analogue à celle de la figure 1 représentant l'utilisation du moyen de mesure conforme à l'invention, et
la figure 3 est une vue schématique en coupe du thermostat du moyen de mesure suivant la figure 2.

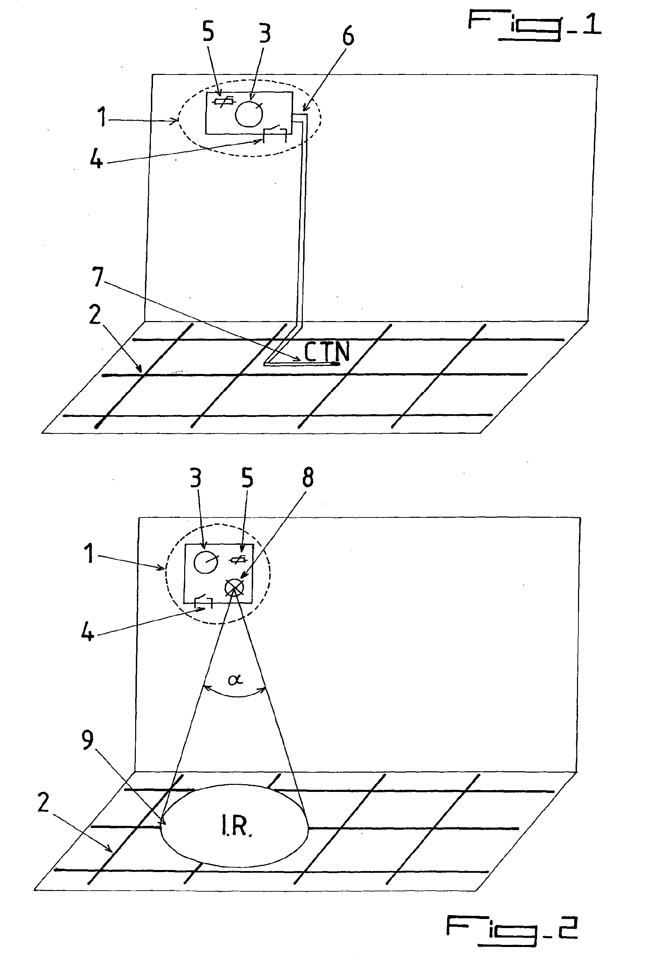

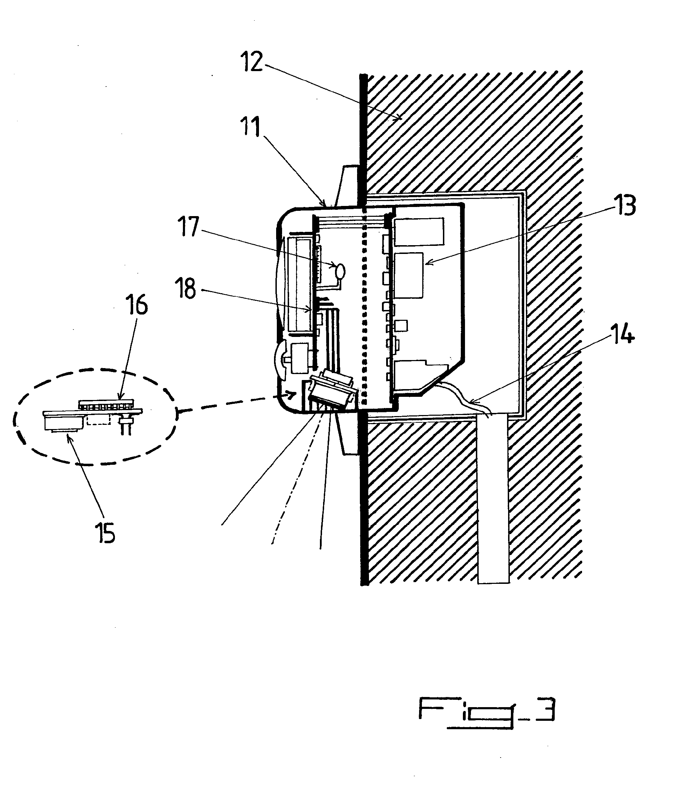

Les figures 1 et 2 des dessins annexés représentent respectivement un moyen de mesure de température de surface d'un sol chauffant et/ou rafraîchissant de type et d'utilisation classiques connus et un moyen de mesure conforme à l'invention, qui comportent chacun un boîtier de thermostat 1 et un plancher chauffant et/ou rafraîchissant 2. Le boîtier de thermostat 1 est muni d'un élément de réglage 3, d'une sortie 4 permettant la coupure ou la mise en marche de l'élément chauffant et/ou rafraîchissant et d'un capteur 5 de température ambiante.

Le moyen de mesure selon l'état connu de la technique représenté à la figure 1 comporte, en outre, une entrée 6 permettant le raccordement d'un capteur à thermistance 7, placé dans le sol.

Conformément à l'invention, le moyen de mesure de température de surface pour surface chauffante et/ou rafraîchissante, qui permet la mesure de la température de surface d'un sol ou d'un plafond, est constitué par un thermostat 1 comportant, outre le capteur 5 de température ambiante, un capteur de radiation thermique 8 à détection optique de température de surface, sans contact physique avec ladite surface chauffante et/ou rafraîchissante. Ce capteur 8 est avantageusement un capteur de rayonnement infrarouge orienté vers le sol et mesure la température d'une certaine surface 9 du sol, déterminée en fonction d'un angle d'ouverture α.

L'utilisation simultanée du capteur de température ambiante 5 et du capteur de radiation thermique 8 permet d'obtenir une meilleure régulation de température, le capteur de température 5 mesurant la température de l'air ambiant et prenant ainsi en compte les apports extérieurs, tels que les apports solaires, alors que le capteur de radiation thermique 8, généralement infrarouge, a pour rôle de mesurer avec précision la température de surface du sol. L'invention réside donc dans la combinaison de la mesure de température surfacique au moyen du capteur de radiation thermique et de la mesure de température ambiante au moyen du thermostat comportant ledit capteur. Il en résulte que la température d'une dalle ou d'un plafond peut être limitée de manière optimale, en réponse aux exigences constructives en matière de bâtiment, et une optimisation du confort de l'utilisateur par prélèvement de la température ambiante à hauteur d'homme.

Cette mesure de température de surface du sol est réalisée, d'une part, pour effectuer la régulation lorsque le capteur 8 est associé à la mesure de température ambiante et, d'autre part, pour obtenir une fonction de limitation de température du sol lorsque le capteur 8 est utilisé seul.

L'utilisation d'un capteur 8 infrarouge présente l'avantage de permettre de mesurer réellement la température surfacique, alors que le capteur à thermistance 7 (figure 1), selon l'état connu de la technique, ne permet de disposer que de la température à l'intérieur du sol.

En outre, en fonction de l'angle d'ouverture α, le capteur 8 mesure la température du sol sur une surface étendue, alors que la thermistance du capteur 7 effectue une mesure sur une surface relativement limitée, voire de manière ponctuelle.

La figure 3 des dessins annexés est une vue en coupe d'un thermostat conforme à l'invention, tel que le thermostat 1 de la figure 2, et qui intègre le capteur 8. Ce thermostat comporte un boîtier 11 en partie encastré dans un mur 12 et une partie puissance 13 permettant le contrôle d'une sortie 14 de mise en marche ou d'arrêt d'un élément chauffant et/ou rafraîchissant.

Par ailleurs, ce thermostat est pourvu d'une thermopile 15, faisant office de capteur 8, placée à l'avant du boîtier et dirigée vers le sol. Cette thermopile 15 est inclinée de telle manière qu'elle ne mesure pas la température du mur 12 sur lequel est monté le boîtier 11 du thermostat, mais uniquement celle du sol.

Le boîtier 11 comporte également un circuit électronique 16 qui est associé à la thermopile 15 et qui permet d'obtenir la température du sol d'après le rayonnement infrarouge émis par ce dernier. Le boîtier 11 comporte, en outre, un capteur de température ambiante 17 ainsi qu'une interface 18 de réglage de la température ambiante et/ou de la surface chauffante et/ou rafraîchissante. Cette interface peut être sous forme d'un moyen d'affichage digital ou d'un autre dispositif de réglage.

Conformément à une autre caractéristique de l'invention, le boîtier 11 est pourvu, au niveau de la thermopile 15, d'une zone réalisée en un matériau perméable au rayonnement infrarouge, ou d'une ouverture de passage dudit rayonnement.

Selon une autre caractéristique de l'invention, non représentée aux dessins annexés, le thermostat 11 peut être pourvu, en outre, d'un moyen d'orientation de la thermopile 15 formant le capteur de radiation thermique 8 et/ou d'un dispositif de réglage prenant en compte les paramètres relatifs à la nature du revêtement du sol, à savoir en bois, en carrelage, etc. Le moyen d'orientation de la thermopile 15 permet de diriger cette dernière vers une partie de la surface du sol ou du plafond, dont la température doit plus spécialement être contrôlée, alors que le dispositif de réglage permet d'intervenir sur le circuit électronique 16 pour en modifier le mode de fonctionnement en fonction des paramètres relatifs à l'émissivité du matériau de surface.

L'invention a été décrite ci-dessus à propos d'un plancher chauffant et/ou rafraîchissant, mais est parfaitement adaptable à un plafond chauffant et/ou rafraîchissant, le capteur thermique étant simplement orienté en direction du plafond.

Grâce à l'invention, il est possible de réaliser un moyen de mesure de température de surface d'un sol ou d'un plafond chauffant et/ou rafraîchissant, sans contact physique avec ladite surface, par utilisation d'une détection thermique de la température d'un sol ou d'un plafond combinée à la mesure de la température ambiante par le thermostat. Ce moyen permet plus particulièrement la régulation de température lors de l'utilisation d'un plancher ou d'un plafond chauffant et/ou rafraîchissant.

En outre, le moyen de mesure conforme permet d'obtenir une fiabilité plus importante que les dispositifs connus à ce jour, du fait qu'il subit aucune contrainte mécanique. De plus, ce moyen est plus sensible aux variations de température et est donc plus réactif.

Enfin, il permet d'effectuer à distance une mesure de la température d'une zone particulière d'une surface de sol ou de plafond.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Moyen de mesure de température de surface pour surface chauffante et/ou rafraîchissante **caractérisé en ce qu'**il est constitué par un thermostat (1, 11) comportant, outre un capteur de température ambiante (5, 17), un capteur de radiation thermique à détection optique (8, 15), sans contact physique avec ladite surface.

2. Moyen de mesure, suivant la revendication 1, **caractérisé en ce que** le capteur de radiation thermique (8) à détection optique est un capteur de rayonnement infrarouge orienté vers le sol et mesure la température d'une certaine surface (9) du sol, déterminée en fonction d'un angle d'ouverture α.

3. Moyen de mesure, suivant la revendication 1, **caractérisé en ce que** le boîtier (11) formant le thermostat comporte, en outre, un capteur de température ambiante (17), ainsi qu'une interface 18 de réglage de la température ambiante et/ou de la surface chauffante et/ou rafraîchissante.

4. Moyen de mesure, suivant la revendication 3, **caractérisé en ce que** le boîtier (11) est pourvu, au niveau d'une thermopile (15) formant le capteur de radiation thermique à détection optique (8), d'une zone réalisée en un matériau perméable au rayonnement infrarouge, ou d'une ouverture de passage dudit rayonnement.

5. Moyen de mesure, suivant la revendication 3, **caractérisé en ce que** le boîtier formant le thermostat (11) est pourvu, en outre, d'un moyen d'orientation de la thermopile (15) formant le capteur de radiation thermique (8) et/ou d'un dispositif de réglage prenant en compte les paramètres relatifs à la nature du revêtement de surface.
